# EUROPEAN PATENT APPLICATION

(11) **EP 4 775 281 A1**
(43) Date of publication of application: **15.07.2026**
(21) Application number: 24888971.9
(22) Date of filing: 18.10.2024
(51) Int. Cl.: A63B 24/00, A63B 71/06, G06V 40/20, G06V 10/74, G06N 3/0475, G06T 7/246

(54) **METHOD FOR GENERATING GUIDE VIDEO BY USING GENERATIVE ARTIFICIAL INTELLIGENCE, AND ELECTRONIC DEVICE THEREFOR**

(30) Priority: 06.11.2023 KR 20230151761; 07.12.2023 KR 20230176990
(71) Applicant: Samsung Electronics Co., Ltd., Suwon-si, Gyeonggi-do 16677 (KR)
(72) Inventor: LEE, Myeongjin, Suwon-si Gyeonggi-do 16677 (KR); YEO, Jaeyung, Suwon-si Gyeonggi-do 16677 (KR); KIM, Jaepil, Suwon-si Gyeonggi-do 16677 (KR); PARK, Byeongju, Suwon-si Gyeonggi-do 16677 (KR); PARK, Jeongmin, Suwon-si Gyeonggi-do 16677 (KR); CHO, Sunghwan, Suwon-si Gyeonggi-do 16677 (KR)
(74) Representative: Appleyard Lees IP LLP
(86) International application number: PCT/KR2024/015850
(87) International publication number: WO 2025/100778

(57) **Abstract**

Disclosed is an electronic device comprising: a memory; and at least one processor. The electronic device may: acquire user information including body information and exercise performance information; generate a user body model on the basis of the body information; and identify a training program on the basis of the exercise performance information. The electronic device may identify at least one exercise video corresponding to the training program. The electronic device may obtain, by using a generative artificial intelligence model, a guide video including exercise images according to the training program of the user body model from the user body model and the identified at least one exercise video. The electronic device may provide an exercise guide including the obtained guide video.

## Description

### TECHNICAL Field

Embodiments disclosed herein relate to a method for generating a guide video using generative artificial intelligence and an electronic device therefor.

### BACKGROUND

Various home training guides are being provided for performing exercises at home. For example, a home training guide may include a video for a particular exercise action. A user may learn the exercise action through the video. With the rising popularity of video platforms and home training, various exercise videos are being uploaded. For example, for squats, there may be a plurality of exercise videos. The plurality of exercise videos may include different guides for the same exercise action.

The above-described information may be provided as related art for the purpose of assisting in understanding the disclosure. No assertion or determination is made as to whether any of the above-described content may be applied as prior art in connection with the disclosure.

### DISCLOSURE

### TECHNICAL SOLUTION

An electronic device according to an embodiment disclosed herein may include a memory storing instructions and at least one processor electrically connected to the memory. The electronic device may execute the instructions by using the at least one processor to acquire user information including body information and exercise performance information, generate a user body model based on the body information, identify an exercise program based on the exercise performance information, and identify at least one exercise video corresponding to the exercise program. The electronic device may execute the instructions, by using the at least one processor, to obtain, from the identified at least one exercise video and the user body model, a guide video including exercise images of the user body model according to the exercise program, by using a generative artificial intelligence model. The electronic device may provide an exercise guide including the acquired guide video by executing the instructions by using the at least one processor.

A method of an electronic device according to an embodiment disclosed herein may include acquiring user information including body information and exercise performance information, generating a user body model based on the body information, identifying an exercise program based on the exercise performance information, identifying at least one exercise video corresponding to the exercise program, acquiring a guide video including exercise images of the user body model according to the exercise program from the identified at least one exercise video and the user body model using a generative artificial intelligence model, and providing an exercise guide including the acquired guide video.

A non-transitory computer-readable storage medium according to an embodiment disclosed herein may store instructions. The instructions, when executed by a processor, may cause the processor to obtain user information including body information and exercise performance information, generate a user body model based on the body information, identify an exercise program based on the exercise performance information, and identify at least one exercise video corresponding to the exercise program. The instructions, when executed by the processor, may cause the processor to obtain, from the identified at least one exercise video and the user body model, a guide video including exercise images of the user body model according to the training program, by using a generative artificial intelligence model. The instructions, when executed by the processor, may cause the processor to provide an exercise guide including the obtained guide video.

### BRIEF DESCRIPTION OF THE DRAWINGS

FIG. 1 illustrates an exercise environment according to one example.
FIG. 2 illustrates a block diagram of an electronic device according to an embodiment.
FIG. 3 illustrates a structure of a system for generating an exercise video according to an embodiment.
FIG. 4 is a block diagram of a body information modeling module according to an embodiment.
FIG. 5 illustrates a body information model acquisition environment according to an embodiment.
FIG. 6 is a flowchart of a method for determining an exercise program according to an embodiment.
FIG. 7 is a schematic diagram of a learning method of a generative artificial intelligence model according to an embodiment.
FIG. 8 is a flowchart of a learning method of a generative artificial intelligence model according to an embodiment.
FIG. 9 is a flowchart of a method for generating a guide video according to an embodiment.
FIG. 10 is a flowchart of a guide providing method according to an embodiment.
FIG. 11 illustrates a user information input UI according to an embodiment.
FIG. 12 illustrates an exercise guide generation UI according to an embodiment.
FIG. 13 illustrates a guide UI according to an embodiment.
FIG. 14 is a flowchart of a method for providing an exercise guide according to an embodiment.
FIG. 15 is a block diagram illustrating an electronic device in a network environment according to various embodiments.

With regard to the description of the drawings, the same or similar reference numerals may be used for the same or similar components.

### DETAILED DESCRIPTION

Hereinafter, various embodiments of the present invention will be described with reference to the accompanying drawings. However, it should be understood that this is not intended to limit the present invention to a particular embodiment, and includes various modifications, equivalents, and/or alternatives of the embodiments of the present invention.

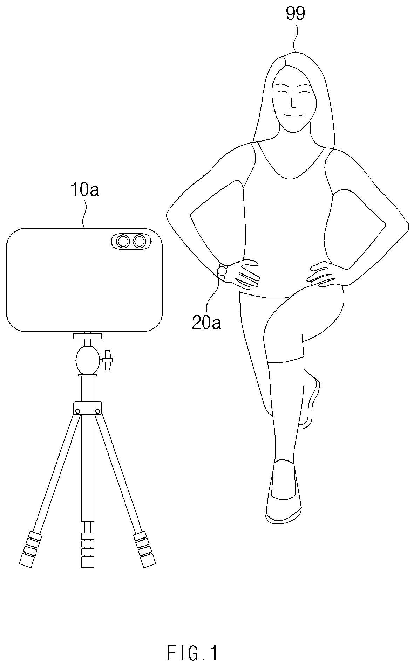

FIG. 1 illustrates an exercise environment according to one example.

Referring to FIG. 1, a user 99 may be provided with a guide for an exercise action using a first electronic device 10a. For example, the user 99 may play a video that guides the exercise action through the first electronic device 10a. The user 99 may search a video platform for the exercise action to select a video. The searched video may not reflect physical characteristics of the user 99. For example, the user 99's ability to perform the exercise action may not be enough to perform the guided action of the searched video. In addition, when a plurality of videos is searched, the user 99 may be difficult to select a suitable video.

According to an embodiment of the disclosure, the first electronic device 10a may be configured to provide an exercise guide based on body information of the user 99 and provide feedback based on the exercise guide.

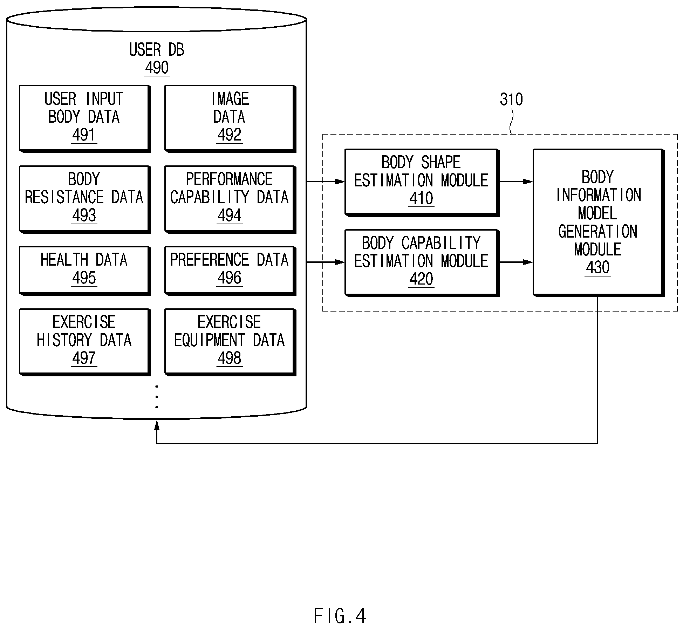

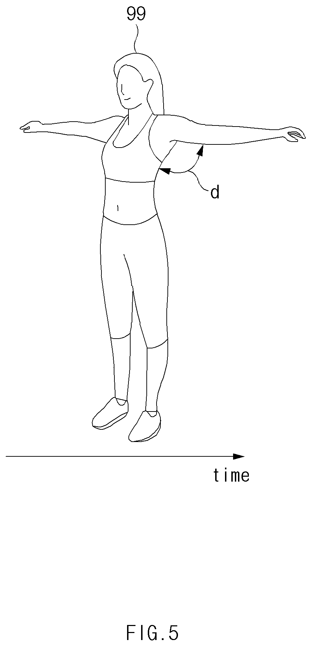

In one example, the first electronic device 10a may generate a body information model. The first electronic device 10a may obtain body information of the user 99. For example, the first electronic device 10a may obtain the body information from a user input and/or an image of the user. The first electronic device 10a, based on the body information, may generate a body information model of the user 99. For example, the body information may include at least one of user input data, a body image, health status information, or a bioelectrical impedance analysis (BIA). The first electronic device 10a may estimate other body information from the body information. For example, the first electronic device 10a may estimate a body shape of the user 99 based on the user input data (e.g., age, sex, weight, height, body size, and/or body fat amount), the body image, and/or the BIA. For example, the body information may be included in a user DB 490 described below in connection with FIG. 4. In one example, the first electronic device 10a, may estimate physical abilities of the user 99 based on the body information. The first electronic device 10a may generate a body information model of the user 99 based on the body information (e.g., the body shape and the physical abilities). The generation of the body information model may be described below in connection with FIGS. 4 and 5. The body information model may include information specific to the user 99.

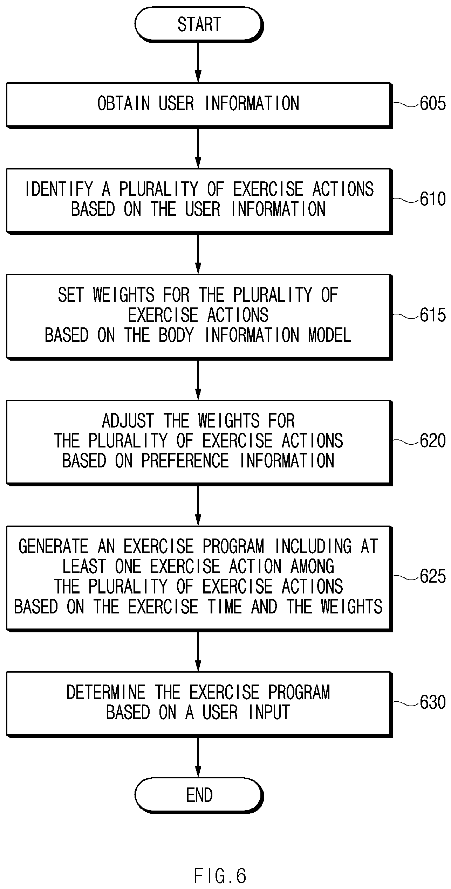

In one example, the first electronic device 10a may generate an exercise program based on the body information model. The first electronic device 10a may identify exercise actions suitable for the user 99 based on the body information model. The first electronic device 10a may identify an injury risk based on the body information model, and may identify an exercise action that avoids the injury risk. The first electronic device 10a may identify the exercise program including at least one exercise action based on an exercise time, an exercise history, preference, and/or the identified exercise actions. The identification of the exercise program may be described below in connection with FIG. 6. By identifying the exercise program based on the information of the user, the injury risk of the user 99 may be reduced and a suitable exercise program may be provided to the user 99.

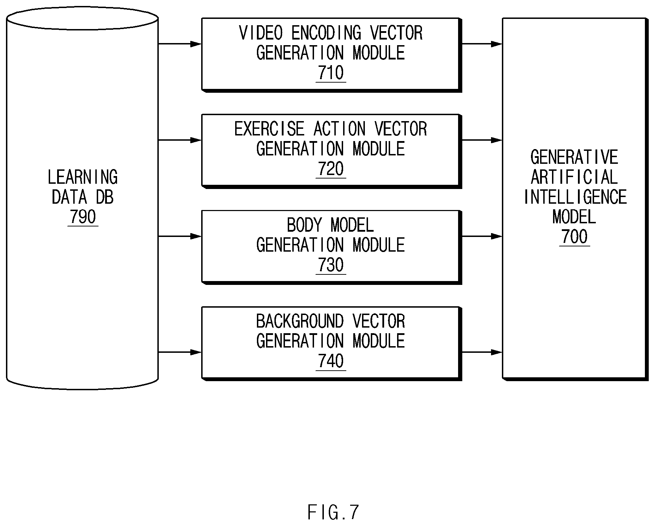

In an example, the first electronic device 10a may generate a guide video. For example, the guide video may be generated using a generative artificial intelligence model based on machine learning. The guide video may include images in which exercise actions are performed by the body model of the user 99. A training method of the generative artificial intelligence model and a generation method of the guide video may be described below with respect to FIGS. 7, 8, and 9. Since the guide video includes the body model of the user 99, the user 99 may more concentrate on the guide video.

In an example, the first electronic device 10a may provide a guide including feedback on the exercise of the user 99. The first electronic device 10a may obtain an exercise performance video of the user 99 corresponding to the guide video. The first electronic device 10a may provide a guide based on a posture difference between the guide video and the exercise performance video. Through the guide, the user 99 may improve the performance of the exercise action.

In an example, the first electronic device 10a may obtain information of the user 99 through a second electronic device 20a. For example, the second electronic device 20a may be a wearable device. The first electronic device 10a may be wirelessly connected to the second electronic device 20a, and may receive information obtained by the second electronic device 20a from the second electronic device 20a.

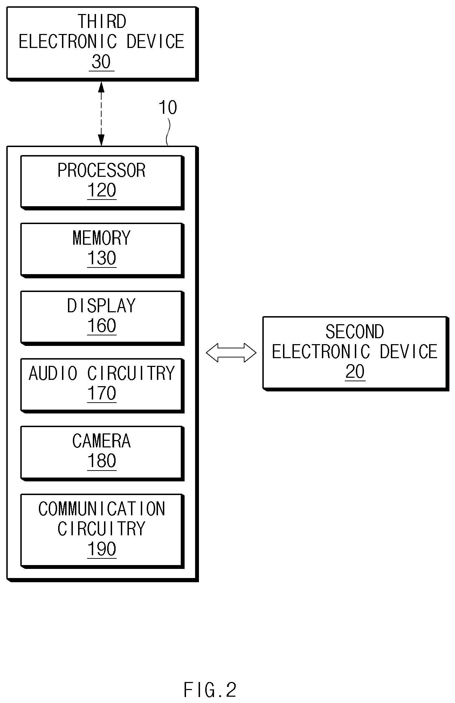

FIG. 2 illustrates a block diagram of an electronic device according to an embodiment.

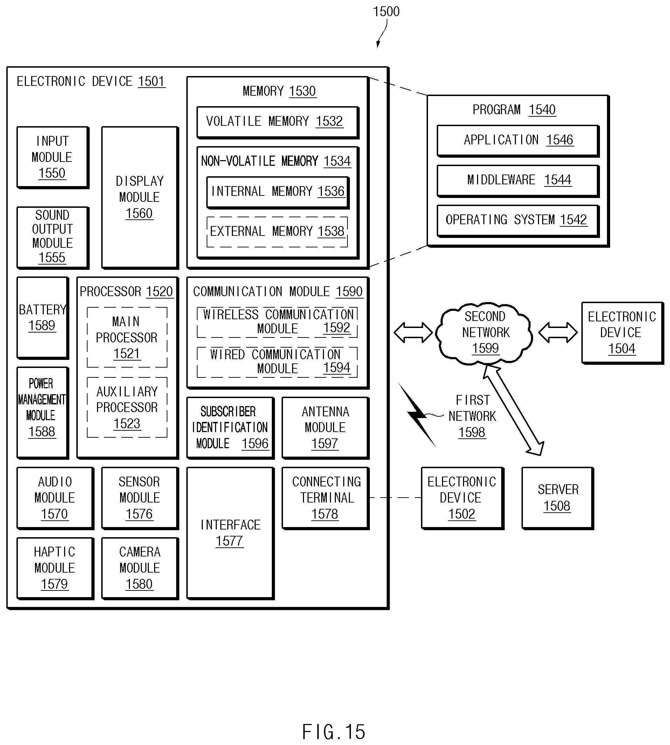

Referring to FIG. 2, according to an embodiment, a first electronic device 10 (e.g., the first electronic device 10a of FIG. 1) may include a processor 120, memory 130, a display 160, audio circuitry 170, a camera 180, and/or communication circuitry 190. For example, the first electronic device 10 may include components similar to that of the electronic device 1501 described below with reference to FIG. 15. The first electronic device 10 may be referred to as any user equipment. For example, the processor 120 may correspond to the processor 1520 of FIG. 15. The memory 130 may correspond to the memory 1530 of FIG. 15. The display 160 may correspond to the display module 1560 of FIG. 15. The audio circuitry 170 may correspond to the input module 1550 and/or the audio module 1570 of FIG. 15. The camera 180 may correspond to the camera module 1580 of FIG. 15. The communication circuitry 190 may correspond to the communication module 1590 of FIG. 15. The components of the first electronic device 10 in FIG. 2 are illustrative, and the components of the first electronic device 10 is not limited thereto. For example, the first electronic device 10 may further include a component not illustrated in FIG. 2. For example, the first electronic device 10 may not include at least one of the components illustrated in FIG. 2.

The processor 120 may be electrically, operatively, or functionally connected to the memory 130, the display 160, the audio circuitry 170, the camera 180, and/or the communication circuitry 190. In various embodiments of the disclosure, when one component is "operatively" connected to another component, it may mean that the one component is connected to enable the other component to operate. For example, the one component may enable the other component to operate by transmitting a control signal to the other component directly or through another component. When the one component is "functionally" connected to the other component in various embodiments of the disclosure, it may mean that the one component is connect to enable the other component to execute a function. For example, the one component may enable the other component to execute a function by transmitting a control signal to the other directly or through another component.

The memory 130 may store instructions. The instructions, when executed by the processor 120, may cause the first electronic device 10 to perform various operations. In various embodiments of the disclosure, operations of the first electronic device 10 may be referred to as operations performed by the processor 120 by executing the instructions stored in the memory 130.

The display 160 may include a plurality of pixels. The display 160 may be configured to display images using the plurality of pixels. In an example, the display 160 may include touch sensing circuitry configured to sense touch inputs and/or stylus sensing circuitry configured to sense stylus inputs. The display 160 may include at least one of a see-through display, a flexible display, a rollable display, a foldable display, and/or a rigid display. The display 160 may be referred to as any electronic component configured to display an image. In an example, the first electronic device 10 may include a plurality of displays.

A person skilled in the art may understand that the form of the display 160 is not limited. In an example, the processor 120 may provide guide information. For example, the processor 120 may supply the guide information through the display 160. In an example, the first electronic device 10 may not include the display 160. The first electronic device 10 may supply the guide information through an external electronic device (not shown) connected through the communication circuitry 190.

The audio circuitry 170 may include at least one microphone and/or at least one speaker. The audio circuitry 170 may obtain, for example, a user's voice. The processor 120 may obtain an audio signal using the audio circuitry 170 and may perform digital conversion on the audio signal. The processor 120 may obtain a user's voice command based on the audio signal. For example, the processor 120 may identify the user's voice command by performing automatic voice recognition on the audio signal. For example, the audio circuitry 170 may provide auditory feedback. The processor 120 may output an auditory signal via a speaker of the audio circuitry 170.

The communication circuitry 190 may provide communication between the first electronic device 10 and another electronic device (e.g., the second electronic device 20 and/or the third electronic device 30). The communication circuitry 190 may support wired communication and/or wireless communication. The communication circuitry 190 may also support short-range wireless communication and/or long-range wireless communication. Those skilled in the art will understand that the communication circuitry 190 of the disclosure is any electronic components for communication with an external electronic device.

According to an embodiment, the second electronic device 20 (e.g., the second electronic device 20a of FIG. 1) may be communicatively connected with the first electronic device 10. For example, the second electronic device 20 may include a wearable device. The second electronic device 20 may include at least one sensor (e.g., an acceleration sensor, a motion sensor, a heart rate sensor, and/or an electrocardiogram sensor). The first electronic device 10 may receive information obtained using the at least one sensor of the second electronic device 20. The first electronic device 10 may identify information about an exercise state of the user based on the received information. The second electronic device 20 may comprise a microphone. The first electronic device 10 may receive an audio signal obtained by the microphone of the second electronic device 20. From the received audio signal, the first electronic device 10 may obtain a voice command of the user. The second electronic device 20 may be referred to as any device (e.g., a peripheral device) for obtaining information of the user from the user. In an example, the second electronic device 20 may include components similar to those of the first electronic device 10.

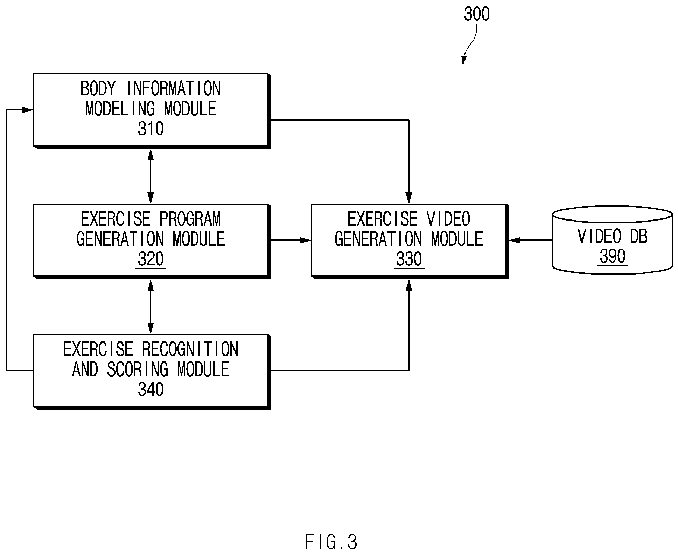

According to an embodiment, the third electronic device 30 may be communicatively connected with the first electronic device 10. The third electronic device 30 may include any external electronic device (e.g., a server). As described below with respect to FIG. 3, at least a portion of the system 300 of FIG. 3 may be implemented in the third electronic device 30. When the system 300 of FIG 3 is implemented by the first electronic device 10, the third electronic device 30 may be omitted.

FIG. 3 illustrates a structure of a system for generating an exercise video according to an embodiment.

Referring to FIGS. 2 and 3, a system 300 for generating an exercise video according to an embodiment may include a body information modeling module 310, an exercise program generation module 320, an exercise video generation module 330, an exercise recognition and scoring module 340, and/or a video DB 390. The components shown in FIG. 3 are an example, and embodiments of the disclosure are not limited thereto. For example, the exercise recognition and scoring module 340 and/or the video DB 390 may be omitted from the system 300. The modules shown in FIG. 3 may correspond to a software module implemented by, for example, a processor executing instructions. In an example, at least some of the modules shown in FIG. 3 may include a hardware module implemented by dedicated hardware.

In an embodiment, the system 300 may be implemented by the first electronic device 10. For example, components of the system 300 may be logical modules implemented by the processor 120 executing instructions stored in the memory 130. In an example, the video DB 390 may exist in another electronic device other than the first electronic device 10. In this case, the first electronic device 10 may access the video DB 390 using the communication circuitry 190.

In an embodiment, the system 300 may be implemented by the first electronic device 10 and the third electronic device 30. For example, some of the components of the system 300 may be implemented by the first electronic device 10, and the remaining components may be implemented by the third electronic device 30. For one example, the body information modeling module 310, the exercise program generation module 320, and the exercise recognition and scoring module 340 may be implemented by the first electronic device 10, and the exercise video generation module 330 and the video DB 390 may be implemented by the third electronic device 30. In this case, the first electronic device 10 may exchange data with the third electronic device 30 using the communication circuitry 190.

Hereinafter, examples in which the system 300 is implemented by the first electronic device 10 are described. However, a person skilled in the art may understand that, as described above, at least some components of the system 300 may be implemented by the third electronic device 30. In the same sense, at least some of operations described below as operations of the first electronic device 10 may be referred to as operations of the third electronic device 30.

In an example, the body information modeling module 310 may establish a body information model. The body information model may include a body model and body information. The body model may include a three-dimensional model reflecting the body shape of the user. The body information may include age, body size, gender, height, weight, joint mobility range, physical strength, muscular endurance, BIA, body fat percentage, health status information, and/or disease information of the user. The body information may act as a limit to the body model. For example, the joint mobility range may be used as a mobility range in which a specific joint of the body model may move. For example, the disease information may be used as a limit to a specific action or a limit to the number of repetitions. In an example, the joint mobility range may be adjusted based on exercise equipment data (e.g., exercise equipment data of FIG. 4). For example, when the user wears a wearable device that assists movement of the knee joint, the joint mobility range may be increased. Operations of the body information modeling module 310 may be described below with respect to FIGS. 4 and 5.

In one example, the exercise program generation module 320 may generate an exercise program based on the body information model and/or user information. For example, the user information may include at least one of user-input body data, body resistance data, performance capability data, health data, preference data, exercise history data, exercise equipment data, or information inferred therefrom. The exercise program generation module 320 may create the exercise program including at least one exercise action based on the body information model and/or the user information. The exercise program generation module 320 may generate the exercise program including the at least one exercise action based on an exercise time set by the user. For example, the exercise program generation module 320 may identify the at least one exercise action based on the user information, and determine a number of repetitions (e.g., a number of sets, a number of repetitions in a set, a duration of a set, and/or a rest time) of the exercise action based on the exercise time. Operations of the exercise program generation module 320 can be described below with respect to FIG. 6.

In an example, the exercise video generation module 330 may generate an exercise video based on the body information model and the exercise program. The exercise video may be referred to as, for example, a guide video. The exercise video may include images of performing an exercise action of the exercise program by the body model. The video DB 390 may store a plurality of videos corresponding to a plurality of exercise actions. In an example, the video DB 390 may store a number of videos classified based on the exercise actions and/or body information (body size, age, and/or gender of the exercise performer in the video). The exercise video generation module 330 may identify at least one video corresponding to the exercise action in the exercise program from the video DB 390. The exercise video generation module 330 may generate the exercise video using the at least one video and the body information model. In an example, the exercise video generation module 330 may generate the exercise video using a generative artificial intelligence model. Operations of the exercise video generation module 330 will be described below with reference to FIGS. 7, 8, and 9.

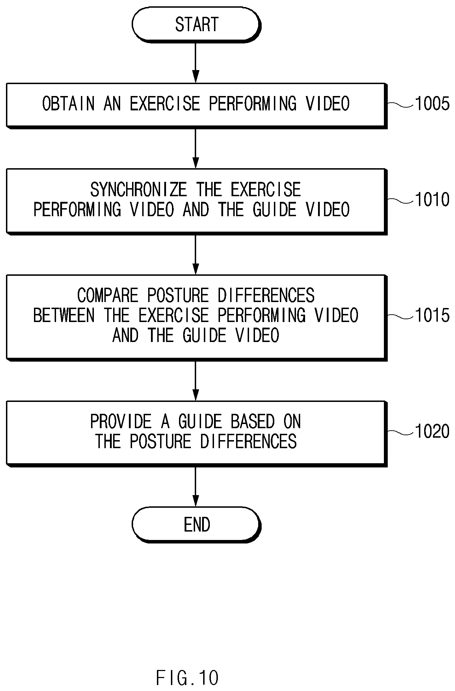

In an example, the exercise recognition and scoring module 340 may provide feedback including guidance for the user's exercise video. The exercise recognition and scoring module 340 may compare the exercise video (e.g., the guide video) and the exercise action performed by the user, and may provide feedback based on the comparison. For example, the exercise recognition and scoring module 340 may identify a score for exercise posture based on a difference between the exercise posture in the user's exercise video and the exercise posture in the guide video. The exercise recognition and scoring module 340 may provide guidance for the user's exercise performance based on the score. In one example, the exercise recognition and score module 340 may provide an evaluation of the user's exercise performance to the body information modeling module 310. The body information modeling module 310 may update the user's body information model based on the user's exercise performance evaluation and/or the user's exercise history. Operations of the exercise recognition and scoring module 340 may be described below with respect to FIG. 10.

FIG. 4 is a block diagram of a body information modeling module according to an embodiment.

Referring to FIGS. 2 and 4, according to an embodiment, the body information modeling module 310 may include a body shape estimation module 410, a body capability estimation module 420, and a body information model generation module 430. In an example, a user DB 490 may be included in the body information modeling module 310. In an example, the user DB 490 may be implemented as a separate component from the body information modeling module 310. The user DB 490 may be a part of the system 300 of FIG. 3.

The components shown in FIG. 4 are an example, and embodiments of the disclosure are not limited thereto. For example, the modules in FIG. 4 may correspond to a software module implemented by a processor executing instructions. In an example, at least some of the modules shown in FIG. 4 may be implemented by the first electronic device 10.

The user DB 490 may store information associated with users (e.g., a user of the first electronic device 10). In one example, the user DB 490 may be stored in the memory 130 of the first electronic device 10. In one example, the user DB 490 may be stored in the third electronic device 30. When the body information modeling module 310 is implemented by the first electronic device 10, and the user DB 490 is stored in the third electronic device 30, the first electronic device 10 may access the user DB 490 using the communication circuitry 190.

For example, information associated with the user may include at least one of user input body data 491, image data 492, body resistance data 493, performance capability data 494, health data 495, preference data 496, exercise history data 497, or exercise equipment data 498. The above-described information associated with the user is an example, and any information associated with the user may be further included in the user DB 490.

The user input body data 491 may include information associated with the body, which is input by the user. In an example, the first electronic device 10 may provide a user interface for inputting information associated with the body. The first electronic device 10 may provide the user interface via the display 160. The first electronic device 10 may obtain the information associated with the body based on an input (e.g., a touch input and/or a voice input) via the user interface. The first electronic device 10 may store the obtained information associated with the body in the user DB 490. For example, the information associated with the body may include at least one of a race, a body size (e.g., a height, a waist circumference, a chest circumference, and/or a hip circumference), a body weight, a body composition, a body fat ratio, a BIA, an age, a sex, or an exercise record.

The image data 492 may include an image of at least a portion of the body of the user. In an example, the first electronic device 10 may obtain an image corresponding to the body of the user using the camera 180. The first electronic device 10 may store, for example, a portion (e.g., an image area including the body) of the obtained image. The first electronic device 10 may identify an image of the body through object recognition and store the identified image as the body image in the image data 492. The image data 492 may include a two-dimensional image and/or a three-dimensional image. For example, the first electronic device 10 may obtain a plurality of two-dimensional images using the camera 180. In an example, the first electronic device may reconstruct a three-dimensional image (e.g., a body model) corresponding to the body of the user from the plurality of two-dimensional images. In an example, the first electronic device may include a sensor configured to obtain three-dimensional information (e.g., depth). The first electronic device 10 may obtain the three-dimensional image corresponding to the body of the user by using the sensor.

The body resistance data 493 may include an electrical analysis result for the user's body. For example, the body resistance data may include body component data (e.g., skeletal muscle mass and body fat amount) based on the biometric resistance analysis. In an example, the body resistance data may store body component data for each part of the body. According to an example, the first electronic device 10 may obtain the body resistance data 493 based on a user input. According to an example, the first electronic devices 10 may obtain the body resistance from the second electronic device 20. The second electronic device 20 may obtain the body resistance data by using a biometric sensor. The first electronic device 10 may obtain body resistance data from the second electronic device 20 by using the communication circuitry 190.

The performance capability data 494 may include information associated with a user's capability to perform an exercise action. For example, the performance capability data 494 may comprise physical strength (e.g., muscle strength, endurance, and/or flexibility) and/or joint mobility range. The physical strength may correspond to at least one of a time the user can sustain the exercise or a number of repetitions the user can repeat the exercise. The muscle strength may correspond to a weight the user can lift. The joint mobility range may comprise information about a range in which the user's joints can move. The joint mobility range may be set for each of at least some of the user's joints. For example, the physical strength, the muscle strength, and/or the joint mobility range may be stored as being mapped to exercise actions. For example, the physical strength for push-ups and the physical strength for dead hang may have different units and/or values.

In an example, the first electronic device 10 may obtain the performance capability data 494 based on a user input. In an example, the first electronic device 10 may estimate the performance capability data 494 from the user input data. The first electronic device 10 may estimate the user's performance capability data 494 based on the user's body information (e.g., age and/or gender) and a demographical average value. In an example, the first electronic device 10 may obtain the performance capability data 494 from an exercise performance video. The first electronic device 10 may recognize exercise actions from the user's exercise performance video and may identify a duration and/or a number of repetitions of the exercise action. The first electronic device 10 may obtain the performance capability data 494 based on the duration and/or the number of repetitions.

The health data 495 may include information associated with a disease and/or health state information that the user has. For example, the health state information may include any information indicating a current health state of the user. For example, the health state information may comprise blood pressure, heart rate, heart rate variability (HRV), electrocardiogram, or any medically measurable information. In an example, the first electronic device 10 may obtain the health data 495 based on an input of the user. In an example, the first electronic device 10 may obtain the health data 495 from information stored in association with an application installed on the first electronic device 10.

The preference data 496 may include preference information of the user set for at least one exercise action. For example, the first electronic device 10 may obtain the preference information based on a user input. The preference information may be set for a specific exercise action. In an example, the first electronic device 10 may provide a list of exercise actions through the display 160. The first electronic device 10 may obtain the preference information for the at least one exercise action based on an input for setting a preference for at least one of the exercise actions in the list.

The exercise history data 497 may include information of an exercise previously performed by the user. For example, the exercise history data 497 may include information of the exercise action, the time at which the exercise action is performed, the number of repetitions, and/or the duration. In an example, the first electronic device 10 may obtain the exercise history data 497 based on a user input.

The exercise equipment data 498 may include information about exercise equipment available to the user. For example, exercise equipment data 498 may include information on exercise equipment owned by the user. In one example, first electronic device 10 may obtain exercise equipment data 498 based on a user input. For example, the exercise equipment may include a peripheral machine (e.g., a bar, a mat, a dumbbell, or a bench) and/or exercise assisting equipment. The exercise assisting equipment may include, for example, a wearable device (e.g., a wearable robot) that supports muscles and/or joints of the user. The wearable device may have a form of an exoskeleton, for example.

According to an embodiment, at least part of the data of the user DB 490 may be updated based on a specified event or a specified period. For example, the first electronic device 10 may be configured to update the user DB 490. The first electronic device 10 may obtain user information from a user input or an external electronic device according to a specified period, and may update the user DB 490. For example, the first electronic device 10 may prompt the user to take a body image at a specified period, and may update the image data 492 using the image obtained with the camera. The first electronic device 10 may update the user DB 490 based on occurrence of a specified event (e.g., a specified period elapses, a specified amount of exercise is achieved, or a user input). For example, when the specified amount of exercise is achieved, the first electronic device 10 may update the performance capability data 494 based on the amount of exercise.

According to an embodiment, the body shape estimation module 410 may estimate a body shape corresponding to the user. For example, the body shape estimation module 410 may estimate the body shape from the user input body data 491, the image data 492, and/or the body resistance data 493. In an example, the body shape estimation module 410 may estimate the body shape of the user based on a body size, an age, an ethnicity, and/or a gender. In an example, the body shape estimations module 410 may obtain a body image of the user from the image data 492 and estimate the body shape based on the body image.

In an example, the body shape estimation module 410 may identify a body model using a trained artificial intelligence model based on a body size, an age, an ethnicity, and/or a gender. The body shape estimation module 410 may obtain a body shape (e.g., a body model) of a user by inputting information (e.g., a body size, an age, an ethic, and/or a gender) of the user into the trained artificial intelligence model. The body shape estimation module 410 may further obtain a body shape of the user using body components. For example, the body shape estimation module 410 may estimate a length of an overall body part based on a height and a weight. The body shape estimation module 410 may estimate a volume and/or a circumference for body parts other than a waist using a waist circumference.

The first electronic device 10 may store a body shape (e.g., a body model) estimated by the body shape estimation module 410 in the memory 130. In an example, the body shape estimation module 410 may update a previously estimated body shape based on the user input body data 491 and/or the exercise history data 497. For example, when a body size is changed, the body shape estimation module 410 may update the previously estimated body shape based on the changed body size. For example, a change in body information (e.g., a change in body weight) may be estimated based on the exercise history data 497. In this case, the body shape estimation module 410 may update the previously estimated body size based on the change in the body information. The estimated body shape may include a body model (e.g., a three-dimensional body model) of the user.

According to an embodiment, the body capability estimation module 420 may estimate the physical ability of the user. The body capability estimation module 420 may estimate the physical ability (e.g., the physical strength and/or the joint mobility range) based on the user information. For example, the body capability estimation module 420 may identify the physical strength of the user based on the statistical physical strength, and the age and/or gender of the user input body data 491. For example, the body capability estimations module 420 may identify the physical strength based on the body resistance data 493. For example, the body capability estimation module 420 may identify the joint mobility range of the user based on the user input body data 491 and/or the image data 492. For example, the body capability estimation module 420 may identify the joint mobility range further based on the exercise equipment data 498. When the user wears a wearable device for exercise assistance, the body capability estimation module 420 may reflect an increase in the joint mobility range by the wearable device in the physical capability. The body capability estimation module 420 may store the identified physical capability as the performance capability data 494.

According to an embodiment, the body information model generation module 430 may generate the body information model based on the physical capability and the body shape. For example, the body information model generation module 430 may generate the body information model using the body shape (e.g., the three-dimensional body model) identified by the body shape estimation module 410 and the physical capability identified by the body capability estimation module 420.

In an example, the body information model generation module 430 may obtain body component data from the body resistance data 493. The body shape estimation module 410 may estimate the body shape based on the body component data and the demographic information. In an example, the body information model generation module 430 may perform fine adjustments on the body shape (e.g., the body model) using the body resistance data 493.

For example, the body information model generation module 430 may adjust the three-dimensional body model based on the performance capability data 494. For example, the body information model generation module 430 may identify a performance capability (e.g., a number of repetitions, an exercise weight, and/or an exercise time) for a particular exercise action from the performance capability data 494. The body information model generation module 430 may adjust a portion of the three-dimensional body model corresponding to a body part required for the particular exercise action based on the performance capability.

In an example, the body information model generation module 430 may adjust a movement range of the body model based on the performance capability data 494. For example, the body information model generation module 430 may generate the body information model by adding the movement range to the body model. In an example, the body information model generation module 430 may identify the movement range for at least one joint from the performance capability data 494, and set the movement range for the at least one joint of the body model according to the identified movement range. Hereinafter, operations of the body information modeling module 310 of the first electronic device 10 may be described with reference to FIG. 5.

FIG. 5 illustrates a body information model acquisition environment according to an embodiment.

Referring to FIGS. 2 and 5, according to an embodiment, the first electronic device 10 may obtain a body information model. For example, the first electronic device 10 may use the body information modeling module 310 of FIG. 3 to obtain the body information model. The first electronic device 10 may generate the body information model based on a user input requesting generation of the body information model.

According to an embodiment, the first electronic device 10 may obtain information of the user 99 based on reception of a user input. For example, the first electronic device 10 may provide information for guiding the user 99 to photograph the body of the user 99 using the camera 180. The first electronic device 10 may obtain image data (e.g., the image data 429 of FIG. 4) from the obtained image. For example, the first electronic device 10 may provide information for inputting user body data. The first electronic device 10 may display a user interface for inputting body data through the display 160. Based on a user input, the first electronic device 10 may acquire user data (e.g., the user input body data 491 and/or the body resistance data 493 of FIG. 4). For example, the first electronic device 10 may acquire body resistance data (e.g., the body resistance data 493 of the FIG. 4) using the second electronic device 20.

According to an embodiment, the first electronic device 10 may obtain information (e.g., performance capability data 494 of FIG. 4) about user's 99 exercise performance capability. For example, the first electronic device 10 may provide a guide for measuring the capability of the user 99 performing an exercise. The guide may include, for example, an instruction for the user 99 to perform a specified pose or a specified exercise action.

The first electronic device 10 may acquire at least one image including a pose or an exercise action of the user 99 using the camera 180, and may measure the capability to perform an exercise based on the acquired image. The first electronic device 10 may identify an action of the user, for example, based on image recognition. In an example, the first electronic device 10 may provide a guide to perform an action to raise the arm. The first electronic device 10 may acquirer movability range information associated with the arm, based on the maximum angle d at which the user 99 raises the arm. The first electronic device 10 may acquire information on the physical strength of the user by measuring a time during which the user 99 maintains a specified action or a pose. The first electronic device 10 may also acquire information on the physical strength of a user by measuring a number of times the user 99 repeats a specified action. For example, the first electronic device 10 may acquire information on the physical strength of the user by measuring a number of times the users 99 repeat a specified action for a specified time.

The first electronic device 10 may identify the exercise performance capability from the input of the user 99. For example, the first electronic device 10 may provide a user interface for querying the performance result of a specified action after guiding the performance of the specified action. The first electronic device 10 may identify the exercise performance capability from the user input indicating the performance result.

FIG. 6 is a flowchart of a method for determining an exercise program according to an embodiment.

Referring to FIGS. 2 and 6, according to an embodiment, the first electronic device 10 may determine an exercise program based on reception of an input. For example, when an input requesting generation of the exercise program is received, the first electronic device 10 may generate the exercise program based on user information. Operations of the first electronic device 10 described below in connection with FIG. 6 may be referred to as operations of the exercise program generation module 320 of FIG. 3. The order of operations described below in connection with FIG. 6 is an example, and embodiments of the disclosure are not limited thereto. For example, at least some operations may be executed differently from the order of FIG. 6, or may be executed substantially simultaneously with other operations. At least some of the operations described below in connection with FIG 6 may be omitted. For example, operation 620 may be omitted from the exercise program determination method.

In operation 605, the first electronic device 10 may obtain user information. For example, the user information may include any information in the user DB 490 of FIG. 4. The first electronic device 10 may obtain the user information according to the methods described above with respect to FIGS. 4 and/or 5. In an example, the user information may include information of an exercise type (e.g., an exercise action to be performed), exercise equipment information (e.g., information of an available exercise equipment), and/or exercise difficulty (e.g., difficulty of an exercise action to be performed). For example, the exercise type may include an exercise such as a muscle strength exercise, a cardio exercise, pilates, or yoga. The exercise equipment may include equipment such as, for example, a dumbbell, a mat, a pilates machine, or an elastic cord. Table 1 shows an example of the user information.

**[Table 1]**

| Exercise Action | Exercise Type | Target area | Difficulty | Exercise Equipment |
|---|---|---|---|---|
| Squat | Muscle strength | Lower Body | low | Not applicable |
| Dumbbell | Muscle strength | Upper Body | low | Dumbbell |
| The hundred | Pilates | Core | Medium | Not applicable |
| ... | ... | ... | ... | ... |

In Table 1, the exercise type may indicate a classification to which the exercise action belongs. The target area may indicate a body part mainly required by the corresponding exercise action. The exercise equipment may indicate an exercise equipment required to perform the exercise action. For example, the first electronic device 10 may provide a list of exercise actions and exercise equipment to a user, and may obtain information on exercise actions and/or exercise equipment to be excluded or selected based on a user input.

In operation 610, the first electronic device 10 may identify a plurality of exercise actions based on the user information. The first electronic device 10 may identify, from a pool of entire exercise actions, a plurality of exercise actions that can be performed by the user based on the user information. For example, the identified plurality of exercise actions may include exercise actions selected by the user. For example, the identified plurality exercise actions may include exercise actions using exercise equipment which is available to the user. For example, the identified plurality of exercise actions may not include exercise actions excluded by the user. The first electronic device 10 may identify a plurality of exercise actions that satisfy the exercise type selected by the user, difficulty selected by the user, and information of the exercise equipment owned by the user.

In operation 615, the first electronic device 10 may set weights for the plurality of exercise actions based on the body information model. As described above with respect to FIG. 4, the body information model may include performance capability data of the user. For example, the first electronic device 10 may increase the weights of exercise actions for body parts with relatively low physical development. For example, the first electronic device 10 may reduce the weights of exercise actions having a difficulty level exceeds a specified range or is less than the specified range relative to the performance capability of the user. For example, the first electronic device 10 may exclude exercise actions that do not fall within a difficulty range corresponding to the performance capability of the user from the plurality of exercise actions. For example, the first electronic device 10 may identify exercise actions having an injury risk and/or exercise actions that cannot be performed based on the performance capability and/or health data (e.g., the health data 495 of FIG. 4) and may decrease the weights of the identified exercise actions. The first electronic device 10 may exclude, from the exercise program, the exercise actions having an injury risk and/or the exercise actions that cannot be performed.

In operation 620, the first electronic device 10 may adjust the weights for the plurality of exercise actions based on the preference information (e.g., the preference data 496 of FIG. 4) and/or the exercise history (e.g., the exercise history data 497 of FIG. 4). In an example, the first electronic device 10 may adjust the weights such that the exercise action preferred by the user or the exercise action not recently performed has a high weight. For example, the first electronic device 10 may increase the weight of the exercise action having a high preference set by the user among the plurality of exercise actions selected through the operations 610 and 615. For example, the first electronic device 10 may decrease the weight of the exercise action having a history of being recently performed (e.g., the exercise action performed within a specified period of time or the exercise actions of the exercise program performed lastly) among the plurality of exercise actions selected throughout the operations 610 and 610. In an example, the first electronic device 10 may not decrease the weight of the exercise action with a high preference, even if it has record of recent performance.

Table 2 shows an example of the weights set for exercise actions.

**[Table 2]**

| Exercise Action | Lastly Performed | Preference (likes) | Weights |
|---|---|---|---|
| Squat | 1 day ago | YES | 0.8 |
| Dumbbell Row | 1 day ago | NO | 0.1 |
| Flank | 7 days ago | NO | 0.5 |

In the example of Table 2, the weight of squats may be set to be relatively high based on the preference. Since dumbbell row has been performed relatively recently compared to the flanks, the weighting of dumbbell row may be set to be relatively low.

In operation 625, the first electronic device 10 may generate an exercise program including at least one exercise action among the plurality of exercise actions based on the exercise time and the weights. The exercise time may be a time set by the user, and may be referred to as a time length of an exercise that the user wishes to perform. The first electronic device 10 may obtain the exercise time from the user input. The first electronic device 10 may identify at least one exercise action (e.g., at least one of the plurality of exercise actions identified through the operations 610 and 615) that may be performed within the exercise time. For example, the first electronic device 10 may identify, among the plurality of exercise actions that may be performed within the exercise time, an exercise action having a relatively high weight as the at least one exercise action.

When the exercise program includes a plurality of exercise actions, the first electronic device 10 may determine the execution order, the number of repetitions, and/or the duration of the plurality of exercise actions. For example, the first electronic device 10 may determine the execution order of the exercise actions based on the difficulty of the plurality of exercise actions. When the exercise program includes a warm-up exercise, a main workout, and a cool-down exercise in sequence, the first electronic device 10 may assign the exercise action with relatively high difficulty to the main workout. For example, the first electronic device 10 may determine the number of repetitions and/or the duration of the exercise action based on the difficulty.

In an example, the first electronic device 10 may determine the execution order based on the classification of the plurality of exercise actions. For example, each of the plurality of exercise actions may belong to at least one of a warm-up exercise, a main workout, and/or a cool-down exercise. One exercise action may belong to one or more classifications (e.g., a warm-up exercise, a main workout, or a cool-down exercise). The order of the exercises may consist of the order of the warm-up exercise, the main workout, and the cool-down exercise. In this case, the first electronic device 10 may assign at least one of the exercise actions belonging to the warm-up exercise to the warm-up exercise phase. The first electronic device 10 may assign at least one of the exercise actions belonging to the main workout to the main workout phase. The first electronic device 10 may assign at least one of the exercise actions belonging to the cool-down exercise to the cool-down exercise phase.

In an example, the first electronic device 10 may determine the number of repetitions and/or duration of the exercise action based on the exercise equipment data 498. For example, when the user wears a wearable device that assists the exercise, the first electronic device 10 may determine the number of repetitions and/or the duration of the exercise action based on wearing state of the wearable device. For example, when the user wears the wearable device for protecting the knee joint and improving the lower body muscle strength, the first electronic device 10 may increase the number of repetitions and/or the time duration of the actions using the lower body muscle strength (e.g., squats).

In operation 630, the first electronic device 10 may determine the exercise program based on the user input. For example, the first electronic device 10 may provide a user interface including information of the exercise program determined through the operation 625. The user may make detailed adjustments to the exercise program. The detailed adjustments may include, for example, adding exercise actions, removing exercise actions, adjusting an order of the exercise actions, adjusting a number of repetitions of the exercise actions, adjusting a difficulty of the exercise, or adjusting an exercise time. Based on a confirm input to the exercise program, the first electronic device 10 may determine the exercise program.

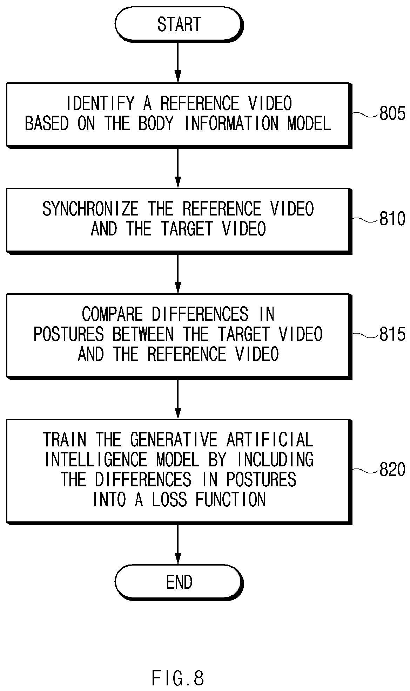

After the exercise program is determined, the first electronic device 10 may generate an exercise video (e.g., a guide video) for the determined exercise program. In an example, the first electronic device 10 may use the exercise video generation module 330 of FIG. 3 to generate the exercise video. For example, the first electronic device 10 uses a generative artificial intelligence model to generate the exercise video. The generative artificial intelligence model may include at least one of a diffusion model, a generative adversarial network (GAN) model, a variation auto encoder (VAE) model, or a transformer model. Hereinafter, a learning method of the artificial intelligence model may be described with reference to FIGS. 7 and 8. For convenience of description, the learning of the artificial intelligence model by the first electronic device 10 is described, but the learning of the artificial intelligence model may be executed by the third electronic device 30 or any other electronic device (not shown).

FIG. 7 is a schematic diagram of a learning method of a generative artificial intelligence model according to an embodiment.

Referring to FIGS. 2 and 7, according to an embodiment, the first electronic device 10 may train the generative artificial intelligence model 700 by using the learning data DB 790. The learning data DB 790 may store a plurality of videos for a plurality of exercise actions.

The first electronic device 10 may perform encoding on each of the plurality of videos in the learning data DB 790. For example, the video encoding vector generation module 710 may perform encoding using an artificial neural network model such as an auto encoder or a transformer. For example, the first electronic device 10 may encode information on each of an exercise action, a body model, and a background from the video. For example, the exercise action vector generation module 720 may extract a representation of the exercise action in the video in the form of a vector. For example, the body model generation module 730 may generate a body model (e.g., three-dimensional body modeling) of a person in the video based on images of the person in the video. For example, the body model generation module 730 may separate a foreground and a background through depth estimation and may identify the person in the video from the separated foreground (e.g., the person). For example, the background vector generation module 740 may generate background vectors by encoding the background separated from the foreground. In an example, the background vector generation module 740 may be trained using a method (e.g., contrastive language image pre-training) of learning by pairing text information with an image.

The first electronic device 10 may train the generative artificial intelligence model 700 using vector inputs (e.g., video encoding vectors, exercise action vectors, a body model, and/or background vectors). For example, the first electronic device 10 may cause the generative artificial intelligence model 700 to generate the exercise video using the vector inputs and train the generative artificial intelligence model 700 such that a difference between the learning data and the generated exercise video is minimized.

In an embodiment, the generative artificial intelligence model 700 may include a plurality of generative artificial intelligence models. For example, each of the plurality of generative artificial intelligence models may be trained for a different exercise action. When the first electronic device 10 performs training for a specific exercise action, the first electronic device 10 may use a plurality of videos for the specific exercise action in the learning data DB 790. The plurality of videos may be for the same exercise action or may have different postures depending on a performer of the exercise action. In order to reduce the influence due to noise on the training data, a loss function including posture inaccuracy may be used. For example, a reference video for the exercise action may be set. The reference video may include an ideal posture for the corresponding exercise action. By reflecting the difference in posture between the reference video and the training data in the loss function, the influence on the generative artificial intelligence model 700 due to the inaccurate posture may be reduced. A training method using the reference video may be described with reference to FIG. 8.

FIG. 8 is a flowchart of a learning method of a generative artificial intelligence model according to an embodiment.

Referring to FIGS. 2 and 8, according to an embodiment, the first electronic device 10 may train a generative artificial intelligence model (e.g., the generative artificial intelligence model 700 of FIG. 7) using a reference video. The order of operations described below with respect to FIG. 8 is an example, and embodiments of the disclosure are not limited thereto. For example, at least some operations may be executed differently from the order of FIG. 8, or may be executed substantially simultaneously with other operations. At least some of the operations described below with respect to FIG 8 may be omitted.

In operation 805, the first electronic device 10 may identify a reference video. The first electronic device 10 may identify, for training of a specific exercise action, an exercise video which will be used as learning data. The reference video may be, for example, a video preset for the specific exercise action.

In operation 810, the first electronic device 10 may synchronize a target video and a reference video. The target video may be an exercise video used as learning data, and may be a video targeted to be generated by a generative artificial intelligence model from vector inputs. The first electronic device 10 may synchronize the target video and the reference video to the same number of frames. For example, the first electronic device 10 may synchronize the target video and the reference video such that the target video and the reference video have the same number of frames for a video segment corresponding to a single repetition of a specific exercise action.

In operation 815, the first electronic device 10 may compare differences in postures between the target video and the reference video. For example, the first electronic device 10 may perform posture estimation on each of the synchronized frames of the target video. The first electronic device 10 may perform posture estimation on each of the synchronized frame of the reference video.

In operation 820, the first electronic device 10 may train the generative artificial intelligence model by including the differences in postures into a loss function. For example, as the difference between the posture of the reference video and the posture of the target video increases, the value of the loss function may increase. By reflecting the posture difference in the loss function, the influence of learning data with the inaccurate posture may be reduced in training the generative artificial intelligence model.

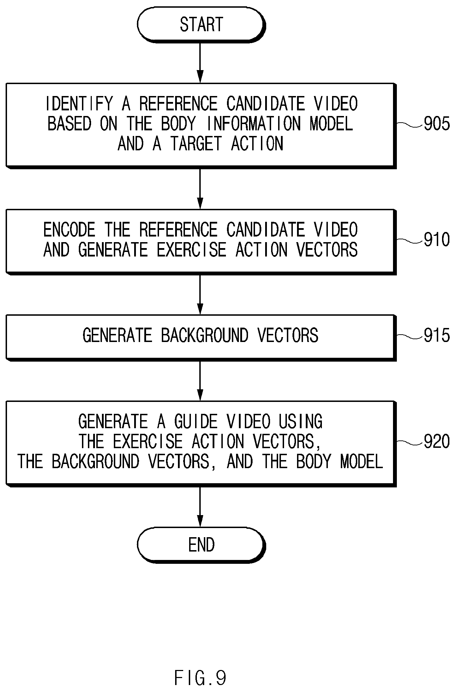

FIG. 9 is a flowchart of a method for generating a guide video according to an embodiment.

Referring to FIGS. 2 and 9, according to an embodiment, the first electronic device 10 may generate a guide video. In an example, the first electronic device 10 may use the generative artificial intelligence model described above in connection with FIGS. 7 and 8 to generate the guide video. The guide video may be referred to as an exercise video including exercise actions in an exercise program. The guide video may include, for example, an exercise video generated by the exercise video generation module 330 of FIG. 3. Operations of the first electronic device 10 described below in connection with FIG. 9 may be referred to as operations of the exercise video generation module 330 in FIG. 3. The order of operations described below in connection with FIG.9 is an example and embodiments of the disclosure are not limited thereto. For example, at least some operations may be executed differently from the order of FIG. 9, or may be executed substantially simultaneously with other operations. At least some of the operations described below in connection with FIG 9 may be omitted.

In operation 905, the first electronic device 10 may identify a reference candidate video based on the body information model and a target action. The target action may be referred to as an exercise action in the exercise program. For example, the first electronic device 10 may identify videos (e.g., a candidate video) corresponding to the target action from the video DB 390 of FIG. 3. Among the identified videos, the first electronic device 10 may identify an exercise video including a performer corresponding to the body information model of the user as the reference candidate video. For example, the first electronic device 10 may identify, among the candidate videos, an exercise video in which the body information model of the performer is similar to the body information model of the user as the reference candidate video. For example, the performer in the reference video may have a similar body shape, age, gender, and/or physical strength to the user. In an example, the first electronic device 10, among the candidate videos, may identify an exercise video of a performer having the highest similarity as the reference candidate video.

In operation 910, the first electronic device 10 may encode the reference candidate video and generate exercise action vectors. For example, the first electronic device 10 may use the video encoded vector generation module 710 of FIG. 7 to encode the reference candidate video. The first electronic device 10 may use the exercise action vector generation module 720 of FIG. 7 to generate the exercise action vectors from the reference candidate video. In an embodiment, when the reference candidate video includes the exercise action vectors, the operation of encoding the reference candidate video and generating the exercise action vectors may be omitted.

In operation 915, the first electronic device 10 may generate background vectors. For example, the first electronic device 10 may use the background vector generation module 740 of FIG. 7 to generate the background vectors. In an example, the background vectors may be generated from an image selected by the user or an image obtained by the camera 180. For example, the first electronic device 10 may provide information (e.g., information in the form of text and/or an image) of an image to be used as a background, and may identify the image to be used as the background based on a user input. For example, the first electronic device 10 may use any background image as the background.

In operation 920, the first electronic device 10 may generate a guide video using the exercise action vectors, the background vectors, and the body model. The first electronic device 10 may generate the guide video based on the body model (e.g., the body information model) of the user, the exercise action vectors, the background vectors, and the video encoding vectors. For example, the first electronic device 10 may input the body model (e.g., a body information model), the exercise action vectors, the background vectors, and the video encoding vectors into the generative artificial intelligence model 700 to generate the guide video. The guide video may include, for example, images in which the body information model of the user performs a specified exercise action on a specified background.

FIG. 10 is a flowchart of a guide providing method according to an embodiment.

Referring to FIGS. 2 and 10, according to an embodiment, the first electronic device 10 may provide feedback on exercise performance of the user. For example, the feedback may include a guide for improving exercise performance of the user. Operation of the first electronic device 10 described below in connection with FIG. 10 may be referred to as operations of the exercise recognition and scoring module 340 of FIG. 3. The order of operations described below in connection with FIG. 10 is an example, and embodiments of the disclosure are not limited thereto. For example, at least some operations may be executed differently from the order of FIG. 10, or may be executed substantially simultaneously with other operations. At least some of the operations described below in connection with FIG 10 may be omitted.

In operation 1005, the first electronic device 10 may obtain an exercise performing video. For example, the first electronic device 10 may use the camera 180 to obtain an exercise performing video of the user, or may use the communication circuitry 190 to receive the exercise performing video from the external electronic device. The exercise performing video may be referred to as a video including images in which the user performs the exercise action of the guide video.

In operation 1010, the first electronic device 10 may synchronize the exercise performing video and the guide video. The first electronic device 10 may synchronize the exercise performing video and the guide video to the same number of frames. For example, the first electronic device 10 may, for a video section corresponding to single repetition of a specified exercise action, synchronize the exercise performing video and the guide video so that the exercise performing video and the guide video have the same number of frames.

In operation 1015, the first electronic device 10 may compare posture differences between the exercise performing video and the guide video. For example, the first electronic device 10 may perform posture estimation on each of the synchronized frames of the exercise performing video. The first electronic device 10 may perform postures estimation on each of the synchronized frames of the guide video. For example, the first electronic device 10 may identify the posture difference from position differences of joints between the postures of the guide video and the exercise performing video.

In operation 1020, the first electronic device 10 may provide a guide based on the posture differences. For example, when the posture difference exceeds a threshold, the first electronic device 10 may provide a guide associated with a joint in which the posture difference exceeds the threshold. The first electronic device 10 may provide the guide by overlaying the guide over the exercise performing video of the user. For example, the guide may visually emphasize performance of an incorrect action using colors and/or arrows. In an example, the first electronic device 10 may provide the guide in a real-time manner. The first electronic device 10 may provide the guide simultaneously with the guide video on a device on which the guide video is currently being played. According to an embodiment, if there is a speed discrepancy between the user's exercise video and the guide video-for instance, if the user is moving faster or slower than the guide-the first electronic device 10 may provide guidance to adjust the user's pace. For example, the guidance for adjusting the user's pace may be provided through on-screen objects (e.g., text or images) or audio output.

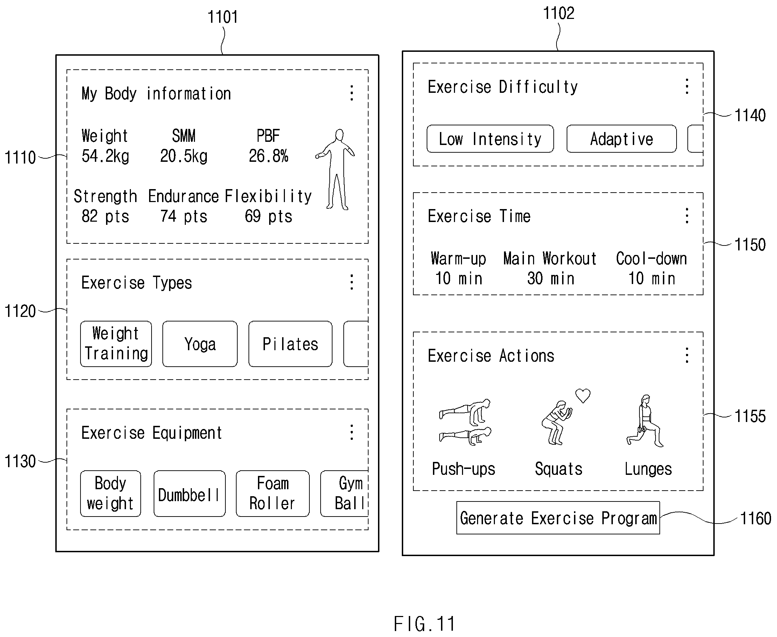

FIG. 11 illustrates a user information input UI according to an embodiment.

Referring to FIGS. 2 and 11, according to an embodiment, the first electronic device 10 may provide a UI for receiving user information (e.g., information of the user DB 490 of FIG. 4). For example, the first electronic device 10 may display a first screen 1101 on the display 160 based on receiving the user input. The first screen 1101 and the second screen 1102 may be a part of the UI.

The first screen 1101 may include body information 1110, exercise type information 1120, and exercise equipment information 1130. The body information 1110 may include, for example, body information of a user. In an example, when an input to the body information 1110 is received, the first electronic device 10 may display a UI for inputting the body information. The exercise type information 1120 may include, for example, information about an exercise type selected by the user. The first electronic device 10 may provide the exercise type information by adding a visual effect (e.g., an effect based on highlight, color, saturation, and/or luminance) to the exercise type whose preference is set high by the user. When the input to the exercise type information 1120 is received, the first electronic device 10 may display the UI for setting the preference for the exercise type.

The second screen 1102 may include exercise difficulty information 1140, exercise time information 1150, and exercise action information 1155. The exercise difficulty information 1140 may include information on the exercise difficulty currently set by the user. For example, the first electronic device 10 may set the exercise difficulty based on an input to the exercise difficulty information 1140. The exercise time information 1150 may include information on the exercise time set by the user. For example, the first electronic device 10 may obtain information on the total exercise time from the user, and may divide and display the obtained total exercise time into a plurality of time periods (e.g., time periods corresponding to a warm-up exercise, a main workout, and a cool-down exercise). For example, the first electronic device 10 may receive an input for each of the plurality of time periods. The exercise action information 1155 may include preference information on exercise actions. For example, the exercise action information 1155 may contain information on exercise actions whose preference is set high by the user. For example, when an input to the exercise action information 1155 is received, the first electronic device 10 may provide a user interface for adjusting preference and/or excluding the exercise actions.

When an input to an image object 1160 (e.g., a button and/or an icon) is received, the first electronic device 10 may determine an exercise program based on the user information. For example, the first electronic device 10 may determine the exercise program according to the method described above with respect to FIG. 6.

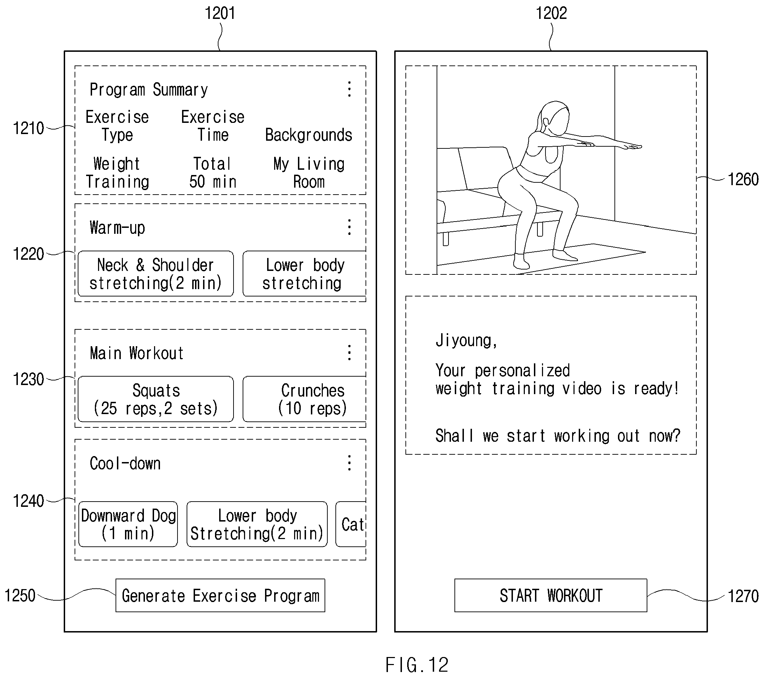

FIG. 12 illustrates an exercise guide generation UI according to an embodiment.

Referring to FIGS. 2 and 12, according to an embodiment, the first electronic device 10 may provide a UI for adjusting an exercise program. For example, the first electronic device 10 may display a first screen 1201 as part of the operation 630 of FIG. 6. For example, the first screen 1201 may include a program summary 1210, warm-up exercise information 1220, main workout information 1230, cool-down exercise information 1240, and an image object 1250 (e.g., a button and/or an icon) for video generation.

The exercise summary 1210 may include summary information of the currently set exercise program. When an input to the exercise summary 1210 is received, the first electronic device 10 may display a UI for controlling the exercise type, exercise time, and/or background of the exercise program. The warm-up exercise information 1220 may include information on the exercise actions of the currently set warm-up exercise. When the input to the warm-up exercise information 1220 is received, the first electronic device 10 may display a UI for editing the exercise action included in the warm-up exercise. The main workout information 1230 may include information on the currently set exercise actions of the main workout. When the input to the main workout information 1230 is received, the first electronic device 10 may display a UI for editing the exercise action included in the main workout. The cool-down exercise information 1240 may include information on the currently set exercise actions of the cool-down exercise. When the input to the cool-down exercise information 1240 is received, the first electronic device 10 may display a UI for editing the exercise action included in the cool-down exercise.

When an input to the image object 1250 for video generation is received, the first electronic device 10 may display a second screen 1202. The second screen 1202 may include a guide exercise action image 1260 and an exercise start image object 1270. In an example, when an input to the exercise start image object 1270 is received, the first electronic device 10 may play a guide video corresponding to an exercise program. In an example, the first electronic device 10 may obtain a video of a user performing an exercise using the camera 180 during playback of the guide video.

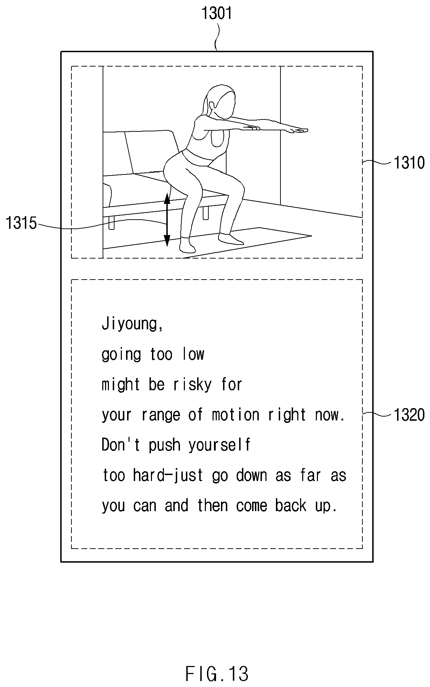

FIG. 13 illustrates a guide UI according to an embodiment.

Referring to FIGS. 2 and 13, according to an embodiment, the first electronic device 10 may provide a guide UI. For example, the first electronic device 10 may provided the guide UI according to the method described above with respect to FIG. 10. The guide UI may include a first screen 1301. The first screen 1301 may include an image 1310 of a guide video. The first electronic device 10 may provide a guidance based on a posture difference between the guide video and the exercise performing video. For example, the first electronic device 10 may display an indicator 1315 indicating the posture difference on the image 1310 of the guide video. For example, the first electronic device 10 may provide guide information 1320 for improving exercise performance.

According to an embodiment, the first electronic device 10 may display the image of the guide video and the image of the exercise performing video together. For example, the first electronic device 10 may display the image of the exercise performing video superimposed on at least a portion of the image of the guide video. The first electronic device 10 may display the images in an overlapping manner by adjusting the transparency of the image of the exercise performing video. In this case, the first electronic device 10 may synchronize the exercise performance video and the guide video and then display the images in a synchronized state.

According to an embodiment, the first electronic device 10 may generate the guide information 1320 based on the user information model. For example, the user information model may indicate that the user is currently unable to perform a full squat. The first electronic device 10 may recommend a modified exercise action based on the user information model. When generating the guide video, the first electronic device 10 may also generate the guide video including the modified exercise action based on the user information model

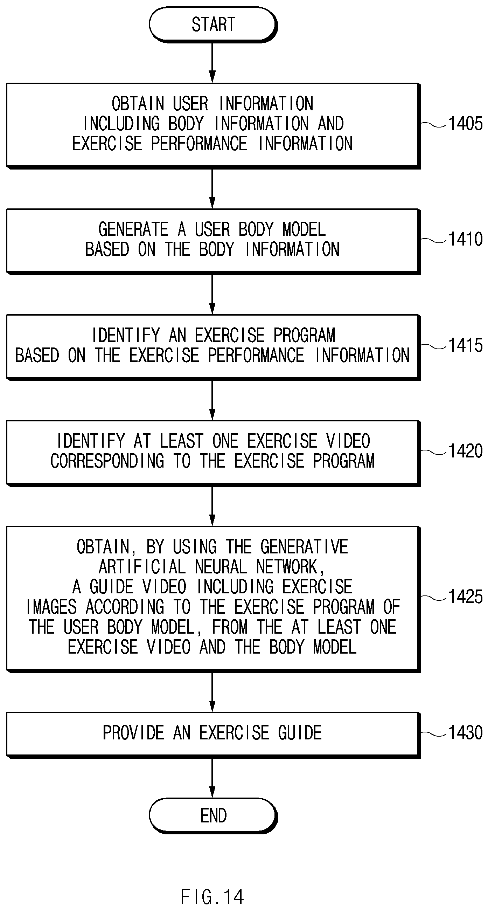

FIG. 14 is a flowchart of a method for providing an exercise guide according to an embodiment.

Operations described below in connection with FIG. 14 may be referred to as operations of the system 300 of FIG. 3. The order of operations described below in connection with FIG. 14 is an example, and embodiments of the disclosure are not limited thereto. For example, at least some operations may be executed differently from the order of FIG. 14, or may be executed substantially simultaneously with other operations. At least some of the operations described below in connection with FIG. 14 may be omitted.

According to an embodiment, an electronic device (e.g., the first electronic device 10 of FIG. 2 or the electronic device 1501 of FIG. 15) may include memory (e.g., the memory 130 of FIG. 2 or the memory 1530 of FIG. 15) and at least one processor (e.g., the processor 120 of FIG. 2 or the processor 1520 of FIG. 15) electrically connected to the memory. The at least one processor may perform operations of the electronic device described below, for example, by executing instructions stored in the memory. In an example, the instructions may be stored in a non-transitory computer-readable storage medium.

In operation 1405, the electronic device may obtain user information (e.g., information stored in the user DB 490 of FIG. 4) including body information (e.g., the user-input body data 491 of FIG. 4) and exercise performance information. For example, the electronic device may provide a measurement guide instructing the performance of at least one action through a display. The electronic device may obtain exercise performance information based on a response of the user to the measurement guide. For example, the exercise performance information (e.g., the performance capability data 494) may include information on at least one of strength, stamina, or flexibility.

In operation 1410, the electronic device may generate a user body model based on the body information. For example, the electronic device may generate the body model according to operations of the body information modeling module 310 of FIG. 3. The body model may be referred to as a three-dimensional model in which the body shape of the user is reflected.

In operation 1415, the electronic device may identify an exercise program based on the exercise performance information. For example, the electronic device may determine at least one of an exercise, a number of repetitions, or an exercise time associated with the exercise program based on the exercise performance information. In an example, the electronic device may determine the exercise program further based on equipment information of the user. The electronic device may determine an exercise to be included in the exercise program based on information (e.g., exercise instrument data 498 of FIG. 4) of equipment available to the user. For example, the electronic device may identify the exercise program according to operations of the exercise program generation module 320 of FIG. 3.

In operation 1420, the electronic device may identify at least one exercise video corresponding to the exercise program. In an example, the electronic device may identify a plurality of exercise videos corresponding to the exercise program. The electronic device may identify at least one exercise video among the plurality of exercise videos based on a similarity between a body image of the plurality of exercise videos and a user body model. For example, the identified at least one exercise video may correspond to the reference video according to the operation 905 of FIG. 9.

In operation 1425, the electronic device may obtain a guide video including the exercise images according to the exercise program of the user body model, from the at least one exercise video and the body model by using the generative artificial neural network. For example, the electronic device may obtain the guide video according to the method described above with reference to FIG. 9.

In an example, the electronic device may identify a reference video from the at least one exercise video and may generate a guide video by adjusting an exercise action in the reference video using the exercise performance information. For example, the exercise performance information may include motion range information for at least one joint.

In an example, the electronic device may transmit the at least one exercise video and the information of the body model to an external server (e.g., the third electronic device 30 of FIG. 2) using the communication circuitry (e.g., the communication circuitry 190 of FIG. 2). The electronic device may obtain the guide video by receiving the guide video from the external server.

In operation 1430, the electronic device may provide an exercise guide. For example, the exercise guide may include the guide video generated in the operation 1425. For example, the electronic device may provide the generated guide video through a display.

In an example, the electronic device may further include a camera (e.g., the camera 180 of FIG. 2). The electronic device may obtain the exercise performing video corresponding to the exercise guide by using the camera. The electronic device may provide the exercise feedback based on the comparison between the exercise guide and the exercise performing video. For example, the electronic device may synchronize the exercise guide and the exercise performing video. After the synchronization, the electronic device may provide the exercise feedback based on a difference in posture between the exercise posture of the exercise guide and the exercise performing video.

FIG. 15 is a block diagram illustrating an electronic device 1501 in a network environment 1500 according to an embodiment of the disclosure. Referring to FIG. 15, the electronic device 1501 in the network environment 1500 may communicate with an electronic device 1502 via a first network 1598 (e.g., a short-range wireless communication network), or at least one of an electronic device 1504 or a server 1508 via a second network 1599 (e.g., a long-range wireless communication network). According to an embodiment, the electronic device 1501 may communicate with the electronic device 1504 via the server 1508. According to an embodiment, the electronic device 1501 may include a processor 1520, memory 1530, an input module 1550, a sound output module 1555, a display module 1560, an audio module 1570, a sensor module 1576, an interface 1577, a connecting terminal 1578, a haptic module 1579, a camera module 1580, a power management module 1588, a battery 1589, a communication module 1590, a subscriber identification module(SIM) 1596, or an antenna module 1597. In some embodiments, at least one of the components (e.g., the connecting terminal 1578) may be omitted from the electronic device 1501, or one or more other components may be added in the electronic device 1501. In some embodiments, some of the components (e.g., the sensor module 1576, the camera module 1580, or the antenna module 1597) may be implemented as a single component (e.g., the display module 1560).

The processor 1520 may execute, for example, software (e.g., a program 1540) to control at least one other component (e.g., a hardware or software component) of the electronic device 1501 coupled with the processor 1520, and may perform various data processing or computation. According to one embodiment, as at least part of the data processing or computation, the processor 1520 may store a command or data received from another component (e.g., the sensor module 1576 or the communication module 1590) in volatile memory 1532, process the command or the data stored in the volatile memory 1532, and store resulting data in non-volatile memory 1534. According to an embodiment, the processor 1520 may include a main processor 1521 (e.g., a central processing unit (CPU) or an application processor (AP)), or an auxiliary processor 1523 (e.g., a graphics processing unit (GPU), a neural processing unit (NPU), an image signal processor (ISP), a sensor hub processor, or a communication processor (CP)) that is operable independently from, or in conjunction with, the main processor 1521. For example, when the electronic device 1501 includes the main processor 1521 and the auxiliary processor 1523, the auxiliary processor 1523 may be adapted to consume less power than the main processor 1521, or to be specific to a specified function. The auxiliary processor 1523 may be implemented as separate from, or as part of the main processor 1521.

The auxiliary processor 1523 may control at least some of functions or states related to at least one component (e.g., the display module 1560, the sensor module 1576, or the communication module 1590) among the components of the electronic device 1501, instead of the main processor 1521 while the main processor 1521 is in an inactive (e.g., sleep) state, or together with the main processor 1521 while the main processor 1521 is in an active state (e.g., executing an application). According to an embodiment, the auxiliary processor 1523 (e.g., an image signal processor or a communication processor) may be implemented as part of another component (e.g., the camera module 1580 or the communication module 1590) functionally related to the auxiliary processor 1523. According to an embodiment, the auxiliary processor 1523 (e.g., the neural processing unit) may include a hardware structure specified for artificial intelligence model processing. An artificial intelligence model may be generated by machine learning. Such learning may be performed, e.g., by the electronic device 1501 where the artificial intelligence is performed or via a separate server (e.g., the server 1508). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 1530 may store various data used by at least one component (e.g., the processor 1520 or the sensor module 1576) of the electronic device 1501. The various data may include, for example, software (e.g., the program 1540) and input data or output data for a command related thereto. The memory 1530 may include the volatile memory 1532 or the non-volatile memory 1534.

The program 1540 may be stored in the memory 1530 as software, and may include, for example, an operating system (OS) 1542, middleware 1544, or an application 1546.

The input module 1550 may receive a command or data to be used by another component (e.g., the processor 1520) of the electronic device 1501, from the outside (e.g., a user) of the electronic device 1501. The input module 1550 may include, for example, a microphone, a mouse, a keyboard, a key (e.g., a button), or a digital pen (e.g., a stylus pen).

The sound output module 1555 may output sound signals to the outside of the electronic device 1501. The sound output module 1555 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 1560 may visually provide information to the outside (e.g., a user) of the electronic device 1501. The display module 1560 may include, for example, a display, a hologram device, or a projector and control circuitry to control a corresponding one of the display, hologram device, and projector. According to an embodiment, the display module 1560 may include a touch sensor adapted to detect a touch, or a pressure sensor adapted to measure the intensity of force incurred by the touch.

The audio module 1570 may convert a sound into an electrical signal and vice versa. According to an embodiment, the audio module 1570 may obtain the sound via the input module 1550, or output the sound via the sound output module 1555 or a headphone of an external electronic device (e.g., an electronic device 1502) directly (e.g., wiredly) or wirelessly coupled with the electronic device 1501.

The sensor module 1576 may detect an operational state (e.g., power or temperature) of the electronic device 1501 or an environmental state (e.g., a state of a user) external to the electronic device 1501, and then generate an electrical signal or data value corresponding to the detected state. According to an embodiment, the sensor module 1576 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 1577 may support one or more specified protocols to be used for the electronic device 1501 to be coupled with the external electronic device (e.g., the electronic device 1502) directly (e.g., wiredly) or wirelessly. According to an embodiment, the interface 1577 may include, for example, a high definition multimedia interface (HDMI), a universal serial bus (USB) interface, a secure digital (SD) card interface, or an audio interface.

A connecting terminal 1578 may include a connector via which the electronic device 1501 may be physically connected with the external electronic device (e.g., the electronic device 1502). According to an embodiment, the connecting terminal 1578 may include, for example, a HDMI connector, a USB connector, a SD card connector, or an audio connector (e.g., a headphone connector).

The haptic module 1579 may convert an electrical signal into a mechanical stimulus (e.g., a vibration or a movement) or electrical stimulus which may be recognized by a user via his tactile sensation or kinesthetic sensation. According to an embodiment, the haptic module 1579 may include, for example, a motor, a piezoelectric element, or an electric stimulator.

The camera module 1580 may capture a still image or moving images. According to an embodiment, the camera module 1580 may include one or more lenses, image sensors, image signal processors, or flashes.

The power management module 1588 may manage power supplied to the electronic device 1501. According to one embodiment, the power management module 1588 may be implemented as at least part of, for example, a power management integrated circuit (PMIC).

The battery 1589 may supply power to at least one component of the electronic device 1501. According to an embodiment, the battery 1589 may include, for example, a primary cell which is not rechargeable, a secondary cell which is rechargeable, or a fuel cell.

The communication module 1590 may support establishing a direct (e.g., wired) communication channel or a wireless communication channel between the electronic device 1501 and the external electronic device (e.g., the electronic device 1502, the electronic device 1504, or the server 1508) and performing communication via the established communication channel. The communication module 1590 may include one or more communication processors that are operable independently from the processor 1520 (e.g., the application processor (AP)) and supports a direct (e.g., wired) communication or a wireless communication. According to an embodiment, the communication module 1590 may include a wireless communication module 1592 (e.g., a cellular communication module, a short-range wireless communication module, or a global navigation satellite system (GNSS) communication module) or a wired communication module 1594 (e.g., a local area network (LAN) communication module or a power line communication (PLC) module). A corresponding one of these communication modules may communicate with the external electronic device via the first network 1598 (e.g., a short-range communication network, such as Bluetooth^{™}, wireless-fidelity (Wi-Fi) direct, or infrared data association (IrDA)) or the second network 1599 (e.g., a long-range communication network, such as a legacy cellular network, a fifth-generation (5G) network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 1592 may identify and authenticate the electronic device 1501 in a communication network, such as the first network 1598 or the second network 1599, using subscriber information (e.g., international mobile subscriber identity (IMSI)) stored in the subscriber identification module 1596.

The wireless communication module 1592 may support a 5G network, after a fourth-generation (4G) network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 1592 may support a high-frequency band (e.g., the millimeter wave (mmWave) band) to achieve, e.g., a high data transmission rate. The wireless communication module 1592 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 1592 may support various requirements specified in the electronic device 1501, an external electronic device (e.g., the electronic device 1504), or a network system (e.g., the second network 1599). According to an embodiment, the wireless communication module 1592 may support a peak data rate (e.g., 20Gbps or more) for implementing eMBB, loss coverage (e.g., 1564dB or less) for implementing mMTC, or user plane (U-plane) latency (e.g., 0.5ms or less for each of downlink (DL) and uplink (UL), or a round trip of 15ms or less) for implementing URLLC.

The antenna module 1597 may transmit or receive a signal or power to or from the outside (e.g., the external electronic device) of the electronic device 1501. According to an embodiment, the antenna module 1597 may include an antenna including a radiating element composed of a conductive material or a conductive pattern formed in or on a substrate (e.g., a printed circuit board (PCB)). According to an embodiment, the antenna module 1597 may include a plurality of antennas (e.g., array antennas). In such a case, at least one antenna appropriate for a communication scheme used in the communication network, such as the first network 1598 or the second network 1599, may be selected, for example, by the communication module 1590 (e.g., the wireless communication module 1592) from the plurality of antennas. The signal or the power may then be transmitted or received between the communication module 1590 and the external electronic device via the selected at least one antenna. According to an embodiment, another component (e.g., a radio frequency integrated circuit (RFIC)) other than the radiating element may be additionally formed as part of the antenna module 1597.

According to various embodiments, the antenna module 1597 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 1501 and the external electronic device 1504 via the server 1508 coupled with the second network 1599. Each of the electronic devices 1502 or 1504 may be a device of a same type as, or a different type, from the electronic device 1501. According to an embodiment, all or some of operations to be executed at the electronic device 1501 may be executed at one or more of the external electronic devices 1502, 1504, or 1508. For example, if the electronic device 1501 should perform a function or a service automatically, or in response to a request from a user or another device, the electronic device 1501, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 1501. The electronic device 1501 may provide the outcome, with or without further processing of the outcome, as at least part of a reply to the request. To that end, a cloud computing, distributed computing, mobile edge computing (MEC), or client-server computing technology may be used, for example. The electronic device 1501 may provide ultra low-latency services using, e.g., distributed computing or mobile edge computing. In another embodiment, the external electronic device 1504 may include an internet-of-things (IoT) device. The server 1508 may be an intelligent server using machine learning and/or a neural network. According to an embodiment, the external electronic device 1504 or the server 1508 may be included in the second network 1599. The electronic device 1501 may be applied to intelligent services (e.g., smart home, smart city, smart car, or healthcare) based on 5G communication technology or IoT-related technology.

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of, or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wiredly), wirelessly, or via a third element.

As used in connection with various embodiments of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 1540) including one or more instructions that are stored in a storage medium (e.g., internal memory 1536 or external memory 1538) that is readable by a machine (e.g., the electronic device 1501). For example, a processor (e.g., the processor 1520) of the machine (e.g., the electronic device 1501) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

## Claims

1. An electronic device 10, 1501 comprising:
memory 130, 1530 storing instructions;
at least one processor 120, 1520 electrically connected with the memory,
wherein the instructions, when executed by the at least one processor individually or collectively, cause the electronic device to:
acquire user information comprising body information and exercise performance information,
generate a user body model based on the body information,
identify an exercise program based on the exercise performance information,
identify at least one exercise video corresponding to the exercise program, acquire, by using a generative artificial intelligence model, a guide video from the identified at least one exercise video and the user body model, the guide video comprising exercise images of the user body model according to the exercise program, and
provide an exercise guide comprising the acquired guide video.

2. The electronic device of claim 1, wherein the instructions, when executed by the at least one processor individually or collectively, cause the electronic device to:
identify a plurality of exercise videos corresponding to the exercise program, and
identify the at least one exercise video among the plurality of exercise videos based on similarities between the user body model and body images of the plurality of the exercise videos.

3. The electronic device of claim 1, wherein the instructions, when executed by the at least one processor individually or collectively, cause the electronic device to:
identify a reference video from the at least one exercise video; and
generate the guide video by adjusting exercise actions in the reference video by using the exercise performance information.

4. The electronic device of claim 3,
wherein the exercise performance information comprises a range of motion information for at least one joint, and
wherein the instructions, when executed by the at least one processor individually or collectively, cause the electronic device to generate the guide video by adjusting a range of motions of the exercise actions in the reference video by using the range of motion information.

5. The electronic device of claim 1,
a display,
wherein the instructions, when executed by the at least one processor individually or collectively, cause the electronic device to:
provide, through the display, a measurement guide instructing performance of at least one movement, and
acquire the exercise performance information based on a user's response for the measurement guide,
wherein the exercise performance information comprises information about at least one of strength, stamina, or flexibility.

6. The electronic device of claim 1, wherein the instructions, when executed by the at least one processor individually or collectively, cause the electronic device to determine at least one of actions associated with the exercise program, a number of repetitions, or an exercise time.

7. The electronic device of claim 1, when executed by the at least one processor individually or collectively, cause the electronic device to determine the exercise program further based on equipment information of a user.

8. The electronic device of claim 1, further comprising communication circuitry,
wherein the instructions, when executed by the at least one processor individually or collectively, cause the electronic device to:
transmit, using the communication circuitry, information of the identified at least one exercise video and the user body model to an external server, and
receive the guide video from the external server.

9. The electronic device of claim 1, further comprising a camera 180, wherein the instructions, when executed by the at least one processor individually or collectively, cause the electronic device to:
acquire an exercise performing video using the camera, and
provide exercise feedback based on a comparison between the exercise guide and the exercise performing video.

10. The electronic device of claim 9, wherein the instructions, when executed by the at least one processor individually or collectively, cause the electronic device to:
synchronize the exercise guide and the exercise performing video, and
provide the exercise feedback based on differences between an exercise posture of the exercise guide and an exercise posture of the exercise performing video.

11. A method of an electronic device, comprising:
acquiring user information comprising body information and exercise performance information;
generating a user body model based on the body information;
identifying an exercise program based on the exercise performance information;
identifying at least one exercise video corresponding to the exercise program;
acquiring, by using a generative artificial intelligence model, a guide video from the identified at least one exercise video and the user body model, the guide video comprising exercise images of the user body model according to the exercise program; and
providing an exercise guide comprising the acquired guide video.

12. The method of claim 11, wherein the identifying of the at least one exercise video comprises:
identifying a plurality of exercise videos corresponding to the exercise program; and
identifying the at least one exercise video among the plurality of exercise videos based on similarities between the user body model and body images of the plurality of the exercise videos.

13. The method of claim 11, wherein the acquiring of the guide video comprises:
identifying a reference video from the at least one exercise video; and
generating the guide video by adjusting exercise actions in the reference video by using the exercise performance information.

14. The method of claim 13,
wherein the exercise performance information includes motion range information for at least one joint,
wherein the acquiring of the guide video includes generating the guide video by adjusting a movable range of the exercise action in the reference video using the movable range information.

15. The method of claim 11,
wherein the acquiring of the user information comprises:
providing a measurement guide instructing performance of at least one action through a display of the electronic device; and
acquiring the exercise performance information based on a response of the user to the measurement guide,
wherein the exercise performance information comprises information about at least one of strength, stamina, or flexibility.
